# EUROPEAN PATENT SPECIFICATION

(11) **EP 0 795 430 B1**
(45) Date of publication and mention of the grant of the patent: **18.09.2002**
(21) Application number: 97200717.3
(22) Date of filing: 11.03.1997
(51) Int. Cl.: B60R 21/055, B60R 13/02, F16B 5/02

(54) **Collapsible tube for car door handles**
Verformbahres Rohr einer Handhabe für eine Fahrzeugtür
Tube déformable pour poignées de porte de véhicule

(30) Priority: 12.03.1996 ES 9600597
(43) Date of publication of application: 17.09.1997
(60) Divisional application: 02005313.8
(73) Proprietor: Lab. Radio, S.A., 46160 Lliria (Valencia) (ES)
(72) Inventor: Baixauli, José Rosa, 46015 Valencia (ES)
(74) Representative: Hess, Peter K., Dipl.-Phys.

(56) References cited:
- EP-A- 0 044 022
- DE-U- 7 044 455
- US-A- 5 531 499
- PATENT ABSTRACTS OF JAPAN vol. 018, no. 682 (M-1729), 22 December 1994 (1994-12-22) & JP 06 270673 A (KASAI KOGYO CO LTD;OTHERS: 01), 27 September 1994 (1994-09-27)

## Description

### OBJECT OF THE INVENTION

This invention, as indicated in the title of this specification, refers to a collapsible tube for car door handles, that presents the peculiarity that it offers a system to fix the car door handles, that prevents serious injuries to the passengers, in case of inner deformation due to side impacts on the vehicle.

Currently, door handles are mounted with passing tubes fixed on the inner plate of the door.

### PRIOR ART

When a strong side impact is received, all the parts suffer deformations or breakages, with the exception of the above-mentioned tubes since due to its distribution perpendicular to the plane that receives the impact, are projected towards the body of the passenger of the car, even contacting with it and producing serious injuries in the sides, hips, etc.

Document EP-A-0 044 022 as the closest prior art discloses a tube with three cylindrical parts with different diameter which are connected by small conical fragile areas.

### DESCRIPTION OF THE INVENTION

Well, the invention in question, offers a simple technical solution based on the design of a collapsible tube or, in other words, a tube that automatically reduces its length and rigidity deforming itself in the direction of application of the impact force.

The door handle itself is arranged as a bridge between two of these tubes fixed perpendicularly to the inner plate of the door. In order to efficiently fulfil their task, the tubular wall incorporates a plurality of longitudinal grooves that practically occupy the whole length of the relevant tube, being such grooves uniformly distributed in an angular direction.

The end of the tubes, with which the fixing of the handle is produced, is closed and presents a small orifice to enable the fixing screw to pass through. The opposite end of these tubes is extended in a wing that conforms the handle. These tubes preferably present a slightly trunco-conical configuration, although their section can also be polygonal, and also have'a slight conicity that opens towards the joint with the wing.

Contributin to the deformation of the tubes at the time of the impact, the tubular wall has a longitudinal section that decreases from both ends towards a quasi-central point, thereby forming an annular weakening line located at the central part of the tube and precisely through it the deformation starts, opening the branches or arms formed as a consequence of the existence of the longitudinal grooves.

When the tubes bend by their weaker central area, outwards, once the strength of the impact exceeds a minimum threshold of deformation, the pressure on the body of the passenger decreases by losing rigidity and, therefore capacity to cause serious injuries.

In order to facilitate the understanding of the characteristics of this invention and as an integral part of this specification, a series of drawings are attached the figures of which, as an illustration and without limitations, the following has been represented:

### BRIEF DESCRIPTION OF THE DRAWINGS

**Figure 1.** It is a schematic longitudinal view, of a car door handle, partially shown, that joins to the metallic structure of the door by means of a pair of tubes, following a conventional arrangement.

**Figure 2.** It is an elevation view, of one of the collapsible tubes for fixing the door handle, in accordance with the invention.

**Figure 3.** It is a plan view of figure 2.

**Figure 4.** It is a section from the A-A cutline of figure 3.

**Figure 5.** It is a section from the B-B cutline of figure 2.

**Figure 6.** It is a section similar to figure 5, although in this case it shows a polygonal configuration of the collapsible tube.

**Figure 7.** It is a schematic view that. shows the deformation of the same tube of figure 2, as a consequence of the impact.

### DESCRIPTION OF THE PREFERRED EMBODIMENT

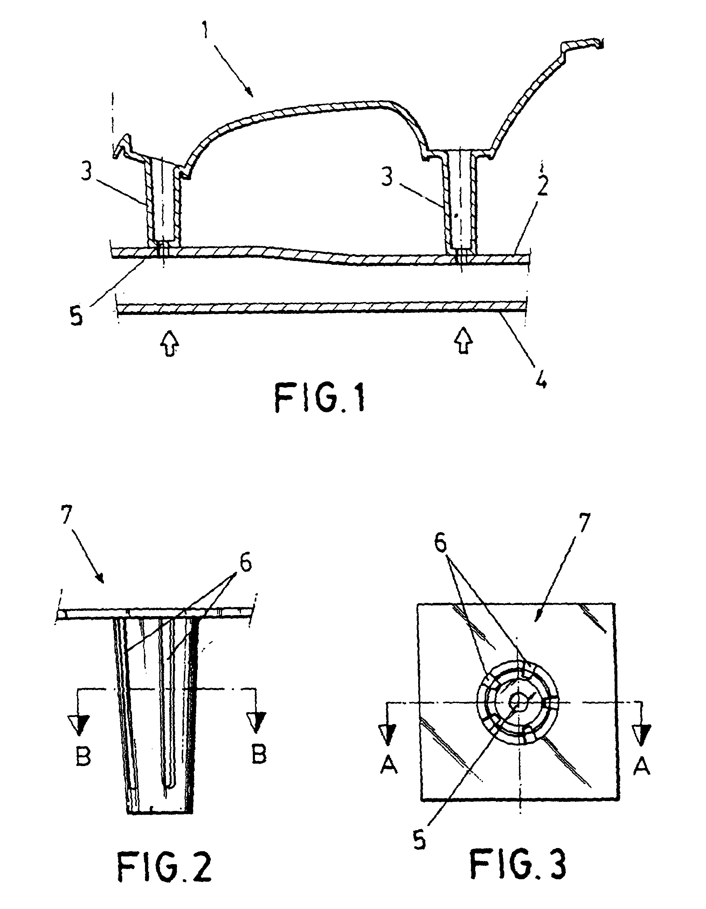

Making reference to the numbering adopted in the figures, we can see how in figure 1 it is referenced in general under number 1 the handle of one of the doors of the car, which joins to the inner plate 2 of the metallic structure of the door, through the passing tubes 3. The reference 4 indicates the outer plate of the car, which is initially deformed as a consequence of a side impact indicated by means of arrows.

The fixing of the handle 1 to the inner plate of the door 2 is made by means of screws passing through the axial hollow space of the relevant tube 3, pressing its head against the ring-shaped wing formed at the relevant end of such tube 3, since its base is closed and incorporates a central hole 5. These tubes 3, owing to their conventional structure, have the risk of injuring the passengers of the car, after a side impact, since they cannot be deformed and are not collapsible.

In accordance with the invention and as shown in figures 2 to 7, it is proposed a structure for the tubes that join the handle 1 to the plate 2, where the tubular wall is affected with a plurality of longitudinal grooves 6 that adopt a distribution uniformly arranged in angular direction, as it can be seen in figure 3 (5 grooves in this example of embodiment. This tube with grooves 6, is referenced in general with number 7.

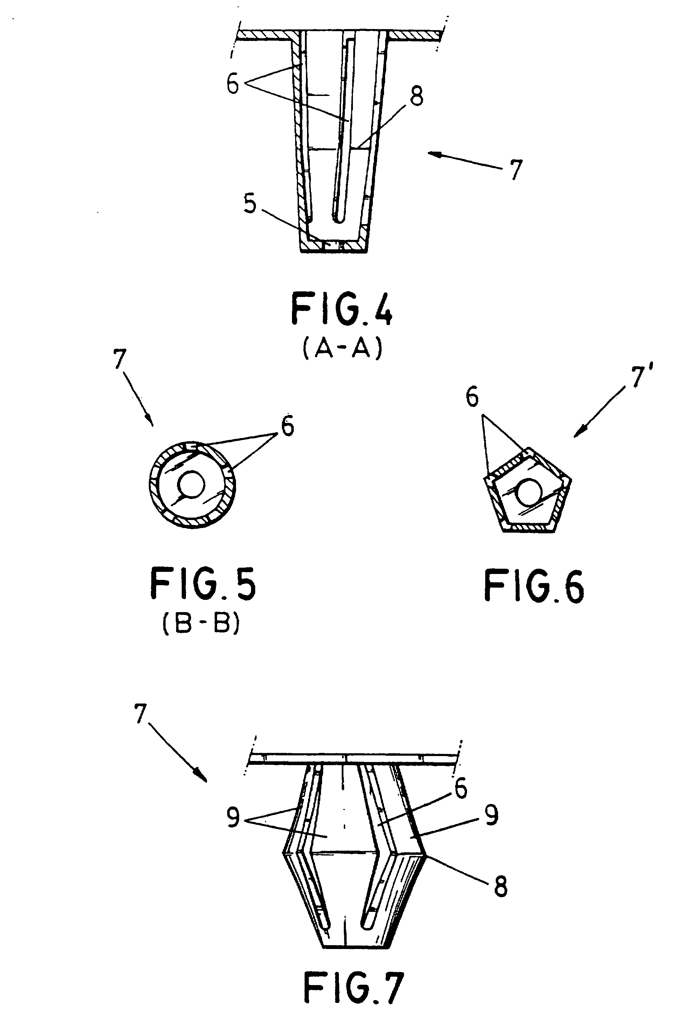

In figure 4 it can be seen how the tubular wall of the collapsible tube 7 shortens towards the central part where it presents a minimum section, thus materializing a ring-shaped weakening line, referenced under number 8. The deformation of the tube 7 begins precisely at such central line 8, as shown in figure 7. The longitudinal grooves 6 conform an equal number of arms 9 that bend at their central area at the time of the impact, reducing the shock on the body of the passenger of the vehicle.

The collapsible tubes 7, instead of having a cylindrical tubular configuration, or slightly trunco-conical, can have a polygonal section, as the pentagonal one shown in figure 6, fulfilling the same task since it collapses when subject to a compression. In this case, the polygonal collapsible tube has been referenced under reference 7'.

## Claims

1. **COLLAPSIBLE TUBE FOR CAR DOOR HANDLES,** especially designed to offer a fixing system for the handle, that prevents injuries caused by side impacts on the vehicle, since it automatically reduces its length and rigidity by deforming itself following the direction of the force of the impact, **characterized in that** it consists of a tubular piece (7, 7') with a slight conicity closed at its smaller base where it incorporates a hole (5) for a screw that fixes it to the inner plate of the door, said tubular piece (7, 7') incorporating longitudinal grooves (6) uniformly distributed in an angular direction, reaching the end where it is fixed to the wing that constitutes the door handle (1) and that joins this tubular piece (7, 7') to another similar and close one.

2. **COLLAPSIBLE TUBE FOR CAR DOOR HANDLES,** according to claim 1, **characterized in that** the tubular wall of the tubular piece has a longitudinal cross-section section that decreases from both ends towards a quasi-central point thus forming a ring-shaped weakening line (8).

## Patentansprüche

1. Verformbares Rohr für Griffe einer Fahrzeugtür, insbesondere konstruiert, um ein Befestigungssystem für den Griff bereitzustellen, das Verletzungen verhindert, die durch einen Seitenaufprall auf das Fahrzeug verursacht werden, da es automatisch seine Länge und Steifigkeit verringert, indem es sich selbst in Richtung der Kraft des Aufpralls verformt, **dadurch gekennzeichnet, dass** es aus einem rohrförmigen Stück (7, 7') mit einer leichten Konizität besteht, an seiner kleineren Basis verschlossen ist, an der es ein Loch (5) für eine Schraube umfasst, die es an der inneren Platte der Tür befestigt, wobei das rohrförmige Stück (7, 7') longitudinale Rillen (6) aufweist, die gleichförmig in einer Winkelrichtung verteilt sind und das Ende erreichen, an dem das Rohr an dem Flügel befestigt ist, der den Türgriff (1) bildet und der dieses rohrförmige Stück (7, 7') mit einem ähnlichen und benachbarten verbindet.

2. Verformbares Rohr für Griffe von Fahrzeugtüren gemäß Anspruch 1, **dadurch gekennzeichnet, dass** die rohrförmige Wand des rohrförmigen Stücks einen longitudinalen Querschnitt aufweist, der von beiden Enden aus in Richtung eines quasi-zentralen Punktes abnimmt und dadurch eine ringförmige Schwächungslinie (8) bildet.

## Revendications

1. Tube compressible pour poignées de porte de voiture conçu particulièrement pour doter la poignée d'un système de fixation, qui évite les blessures provoquées par des impacts latéraux sur le véhicule, puisque sa longueur et sa rigidité diminuent automatiquement grâce à sa déformation suivant la direction de la force de l'impact, **caractérisé en ce qu'**il est constitué d'une pièce tubulaire (7, 7') présentant une légère conicité, fermée à sa base la plus petite où il comprend un trou (5) de passage d'une vis qui le fixe à la plaque intérieure de la porte, ladite pièce tubulaire (7, 7') comprenant des gorges longitudinales (6) distribuées uniformément selon une direction angulaire, atteignant l'extrémité où il est fixé à l'aile qui constitue la poignée de porte (1) et qui relie cette pièce tubulaire (7, 7') à une autre similaire et proche.

2. Tube compressible pour poignées de porte de voiture selon la revendication 1, **caractérisé en ce que** la paroi tubulaire de la pièce tubulaire présente une section en coupe transversale longitudinale diminuant depuis les deux extrémités vers un point quasi central, formant ainsi une ligne d'affaiblissement de forme annulaire (8).
